# FASCICULE DE BREVET EUROPEEN

(11) **EP 2 979 138 B1**
(45) Date de publication et mention de la délivrance du brevet: **28.06.2017**
(21) Numéro de dépôt: 14712011.7
(22) Date de dépôt: 25.03.2014
(51) Int. Cl.: G04B 5/16

(54) **PROCÉDÉ DE FABRICATION D'UNE MASSE OSCILLANTE EN MATÉRIAUX COMPOSITES**
VERFAHREN ZUR HERSTELLUNG EINES SCHWINGKÖRPERS AUS VERBUNDSTOFFEN
METHOD FOR MAKING A SWINGING BODY CONSISTING OF COMPOSITE MATERIALS

(30) Priorité: 28.03.2013 EP 13161768; 15.04.2013 EP 13163777
(43) Date de publication de la demande: 03.02.2016
(73) Titulaire: ETA SA Manufacture Horlogère Suisse, 2540 Grenchen (CH)
(72) Inventeur: STRAHM, Florent, CH-2605 Sonceboz-Sombeval (CH); KAELIN, Laurent, CH-2615 Sonvilier (CH); TINGUELY, Xavier, CH-2046 Fontaines (CH); CAPPADONA, Giuseppe, CH-2504 Bienne (CH)
(74) Mandataire: Honoré, Anne-Claire
(86) Numéro de dépôt international: PCT/EP2014/055984
(87) Numéro de publication internationale: WO 2014/154705

(56) Documents cités:
- EP-A1- 2 482 142
- EP-A1- 2 592 498
- CH-A- 288 208
- DE-A1- 1 944 849

## Description

### DOMAINE DE L'INVENTION

La présente invention concerne un procédé de fabrication d'une masse oscillante pour remontoir automatique de montre, la masse oscillante comportant une partie centrale en un premier matériau composite et un secteur lourd en un second matériau composite chargé de particules de métal lourd.

### ART ANTERIEUR

On connaît des masses oscillantes pour remontoir automatique de montre en matériau composite. Le document de brevet EP 2 482 142 décrit une masse oscillante réalisée par moulage d'un polyamide chargé de fibres de verre et de particules de tungstène. Le matériau composite utilisé a une densité supérieure à 8 et les fibres de verre qu'il contient constituent entre 1,5 et 7% de la masse totale. La possibilité de réaliser cette masse oscillante par moulage présente l'avantage de permettre d'obtenir des formes diverses parfois très compliquées sans aucune opération de reprise.

Dans une masse oscillante, la partie centrale qui fait le lien entre le secteur lourd et l'axe de pivotement doit être suffisamment souple et élastique pour absorber les chocs. Si ce n'est pas le cas, la suspension de la masse, ou la partie centrale elle-même, risque de se casser. D'autre part, l'ajout de particules de métal lourd dans une matière plastique a tendance à rendre cette dernière cassante. Des essais effectués par la demanderesse ont montré que même lorsque la matière plastique chargée était additionnée d'un renfort sous forme de fibres, les masses oscillantes produites pouvaient être trop fragiles pour certaines applications. Une solution à ce problème serait de réaliser le secteur lourd et la partie centrale de la masse oscillante à partir de deux matériaux composites différents. On peut par exemple recourir à l'injection d'un matériau composite chargé de particules de métal lourd pour former d'abord le secteur lourd. Ensuite, on peut injecter un matériau composite sans les particules de métal lourd pour former la partie centrale de la masse oscillante bi-matière par surmoulage.

Un premier problème avec la solution qui vient d'être décrite est que, lors du surmoulage pour former la partie centrale de la masse oscillante, le métal lourd a tendance à diffuser, à partir du secteur lourd, jusque dans la partie centrale en altérant la couleur du matériau composite et en produisant des taches inesthétiques. Un second problème avec la solution qui vient d'être proposées est que l'adhérence du matériau composite sans métal lourd sur le matériau composite avec métal lourd n'est pas très bonne. L'homme du métier n'aura d'ailleurs aucune peine à comprendre que, dans le contexte de l'horlogerie, le problème ci-dessus est rendu d'autant plus critique que les pièces réalisées sont extrêmement petites. On peut noter à cet égard que l'épaisseur d'une masse oscillante bi-matière à l'endroit où la partie centrale et le secteur lourd se rejoignent devra normalement être inférieure à 2 millimètres (voire inférieure à 1 millimètre dans certains cas). Il en découle que l'étendue de la surface de contact entre matériaux composites avec et sans métal lourd est forcément très limitée. Ainsi, même si la partie centrale des masses oscillantes bi-matière réalisées avec cette technique de surmoulage ne risque plus de se casser, la solution proposée ne fait que déplacer le problème. En effet, c'est maintenant le secteur lourd qui risque de se détacher de la partie centrale en cas de choc.

### BREF EXPOSE DE L'INVENTION

Un but de la présente invention est de remédier au problème susmentionné en fournissant un procédé de fabrication d'une masse oscillante bi-matière dans laquelle l'apparence du joint entre la partie centrale et le secteur lourd est propre et sans bavures, et dans laquelle ce joint ne risque pas de se rompre. La présente invention atteint ces buts en fournissant un procédé de fabrication d'une masse oscillante pour remontoir automatique de montre conforme à la revendication 1 annexée.

Précisons qu'ici, l'expression « métal lourd » désigne tout métal dont la densité est supérieure à 11, et préférablement supérieure à 17. D'autre part, l'expression « matériau composite » désigne ici généralement un matériau constitué d'une matrice en matière plastique et d'un renfort (de préférence sous la forme de fibres) qui assure la tenue mécanique.

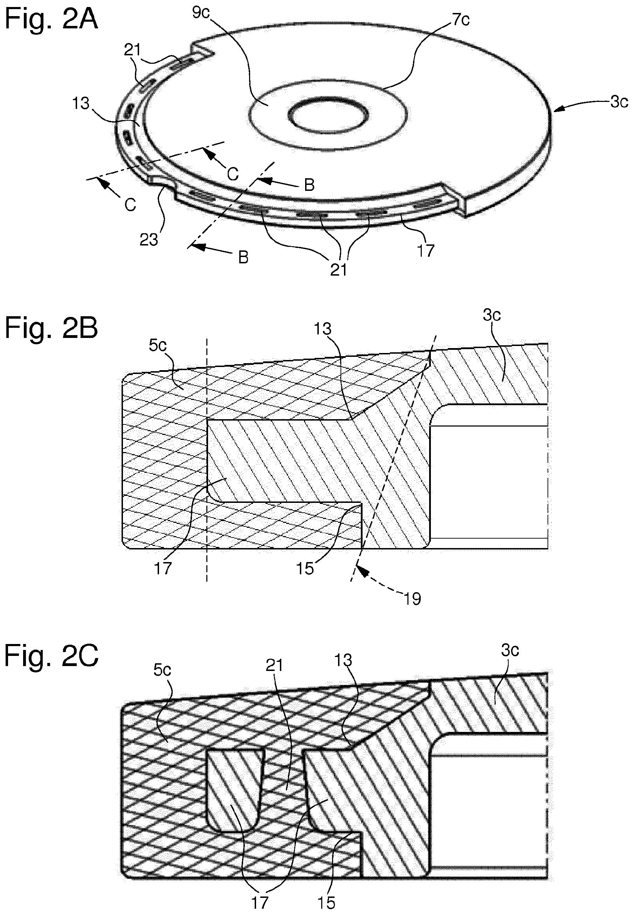

Précisons également les expressions « l'arrête supérieure de la partie centrale », « au-dessus de la nervure latérale », ou encore « sous la nervure latérale » sont à comprendre par rapport à l'orientation sur la page des vues en coupe des figures 2B, 2C, 3B, 4B, 5B et 5C. On comprendra de plus que dans le cas de figure habituel où la masse oscillante est montée entre le mouvement et le fond de la boîte de montre, le dessus de la masse oscillante correspond au côté fond, alors que le dessous de la masse oscillante correspond au côté mouvement.

Selon l'invention la partie centrale de la masse oscillante est moulée la première. La partie centrale moulée présente une nervure latérale. De plus, une feuillure est formée dans l'arrête supérieure de la partie centrale au-dessus de la nervure latérale. La nervure latérale est donc sensiblement plus mince que la partie centrale. La nervure latérale risque donc de ce déformer. C'est la raison pour laquelle, selon l'invention des intervalles sans contre-dépouille sont arrangés le long de l'arrête périphérique en alternance avec les premiers intervalles, de manière à rigidifier la nervure. Selon l'invention, le secteur lourd est ensuite surmoulé sur la partie centrale, de sorte que la nervure latérale est enrobée dans le second matériau composite et que la partie centrale et le secteur lourd sont imbriqués. On comprendra enfin que, du fait que l'opération le secteur lourd est formé après la partie centrale, les particules de métal lourd contenues dans le second matériau composite ne risquent pas de contaminer le premier matériau composite.

### BREVES DESCRIPTION DES FIGURES

D'autres caractéristiques et avantages de la présente invention apparaîtront à la lecture de la description qui va suivre, donnée uniquement à titre d'exemple non limitatif, et faite en référence aux dessins annexés dans lesquels :
- la figure 1A est une vue en perspective du dessus d'une première variante de masse oscillante fabriquée par un procédé conforme à l'invention ;
- la figure 1B est une vue en perspective du dessus d'une deuxième variante de masse oscillante fabriquée par un procédé conforme à l'invention ;
- la figure 2A est une vue en perspective du dessus de la partie centrale d'une troisième variante de masse oscillante fabriquée par un procédé conforme à l'invention ;
- la figure 2B est une vue partielle en coupe de la masse oscillante de la figure 2A. Le plan de coupe correspond au rayon B-B sur la figure 2A, et la vue partielle montre particulièrement la zone d'imbrication du secteur lourd avec la partie centrale ;
- la figure 2C est une vue partielle en coupe semblable à celle de la figure 2B, mais le plan de coupe correspondant au rayon C-C sur la figure 2A;
- la figure 3A est une vue en plan de dessous de la partie centrale de la masse oscillante représentée en perspective à la figure 1A ;
- la figure 3B est une vue partielle en coupe de la masse oscillante de la figure 1A et 3A, le plan de coupe correspondant au rayon B-B sur la figure 3A ;
- la figure 4A est une vue en plan de dessous d'un premier mode de réalisation de la partie centrale de la masse oscillante représentée en perspective à la figure 1B ;
- la figure 4B est une vue partielle en coupe de la masse oscillante dont la partie centrale fait l'objet de la figure 4A, le plan de coupe correspondant au rayon B-B ;
- la figure 4C est une vue en plan de dessous analogue à celle de la figure 4A, mais montrant la partie centrale d'une masse oscillante fabriquée par un procédé non conforme à l'invention ;
- la figure 5A est une vue en perspective de dessous d'un second mode de réalisation de la partie centrale de la masse oscillante représentée en perspective à la figure 1B ;
- la figure 5B est une vue partielle en coupe de la masse oscillante dont la partie centrale fait l'objet de la figure 5A, le plan de coupe correspondant au rayon B-B ;
- la figure 5C est une vue partielle en coupe semblable à celle de la figure 5B, mais dans laquelle, la feuillure est en biseau au lieu d'être au moins partiellement droite.

### DESCRIPTION DETAILLEE DE DIFFERENTS MODES DE REALISATIONS

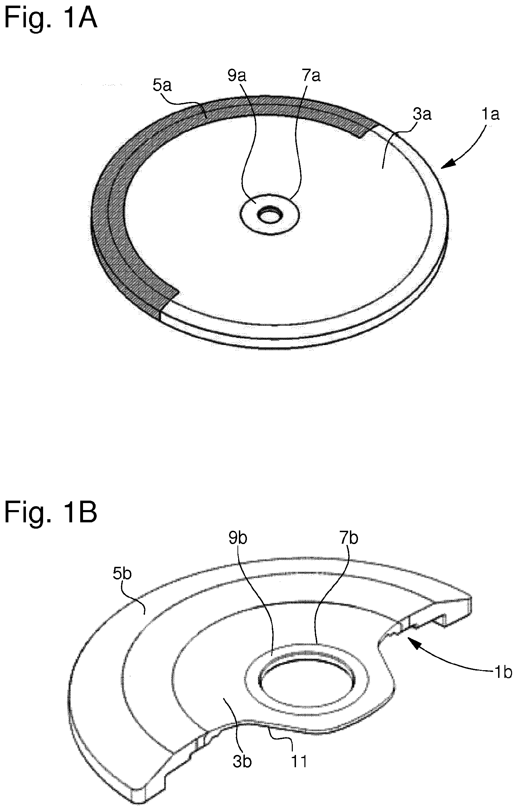

La figure 1A est une vue en perspective d'une première variante de masse oscillante fabriquée par un procédé conforme à l'invention. Cette masse oscillante « bi-matière » 1a comporte classiquement une partie centrale ou support 3a et un secteur lourd 5a en forme de demi-bague. Selon l'invention, la partie centrale 3a est réalisée en un premier matériau composite, alors que le secteur lourd 5a est réalisé en un second matériau composite chargé de particules de métal lourd. Dans le mode de réalisation illustré par la figure 1A, le second matériau composite est chargé de particules de tungstène en quantité suffisante pour lui conférer une densité supérieure à 8 et, de préférence même supérieure à 10.

La fonction de la partie centrale ou support 3a de la masse oscillante est de relier le secteur lourd 5a à un axe de pivotement (non représenté). A cet effet, la partie centrale en matériau composite présente une ouverture centrale 7a dans laquelle sont arrangés des moyens de fixation à l'axe de pivotement. Ces moyens de fixation ne concernent qu'indirectement l'invention et ils ne seront pas décrits en détail. Suffit de dire que dans le présent mode de réalisation, les moyens de fixation comportent une bague (référencée 9a sur la figure 1A) qui constitue le moyeu de la masse oscillante. Dans le présent exemple, la partie centrale est obtenue en une seule étape de moulage avec la bague 9a en métal. Plus précisément, la partie centrale 3a est surmoulée sur la bague. On comprendra toutefois que, selon une variante, cette bague pourrait être fixée dans la partie centrale par collage, rivure ou tout autre moyen à la disposition de l'homme du métier.

Selon le mode de réalisation de la figure 1A, la partie centrale 3a à la forme générale d'un disque plein. Quant au secteur lourd 5a, il a la forme d'un secteur d'anneau qui s'étend sur environ 180°. Comme on va le voir plus en détail plus loin, le secteur lourd 5a en matériau composite chargé de particules de tungstène est surmoulé sur le support 3a en matériau composite non chargé. Le fait de réaliser la partie centrale en un matériau composite non chargé permet de donner à cette partie une plus grande souplesse et une plus grande élasticité, et ainsi d'améliorer la résistance aux chocs de la masse oscillante.

La figure 1B est une vue en perspective d'une deuxième variante de masse oscillante bi-matière fabriquée par un procédé conforme à l'invention. Sur cette figure, les éléments identiques, ou fonctionnellement équivalents, à ceux représentés sur la figure 1A sont désignés par les mêmes numéros de référence. A la différence de la première variante, comme on peut le voir sur la figure 1B, la partie centrale ou support 3b présente d'un côté une large découpe 11 qui donne au support une forme générale plus proche d'un demi-disque que d'un disque. Comme le sait bien l'homme du métier, la forme générale de la masse oscillante de la figure 1 B est une forme tout à fait courante.

On peut voir encore sur la figure 1B que le support 3b présente une ouverture 7b agencée pour recevoir une bague 9b qui fait partie des moyens de fixations de la masse oscillante 1b à son axe de pivotement (non représenté). Comme dans le cas de la première variante, la partie centrale 3b est d'abord surmoulée sur la bague 9b en métal, et le secteur lourd 5b est ensuite réalisé en surmoulant un matériau composite chargé de particules de tungstène sur le support 3b. Comme on peut le voir, le secteur lourd 5b a la forme d'un secteur d'anneau qui s'étend sur un peu moins de 180 °.

Comme on l'a déjà dit, les parties centrales 3a et 3b sont réalisées en un matériau composite non chargé. Par « matériau composite », on entend un matériau comprenant, d'une part, une matrice en matière plastique, et d'autre part, un renfort (de préférence sous la forme de fibres) qui assure la tenue mécanique. Conformément à l'invention, pour réaliser la pièce centrale 3a ou 3b d'une masse oscillante, on a recours à la technique du moulage par injection. La technique du moulage par injection de pièces en matériau composite, sans addition de particules de métal lourd, ne sera pas décrite ici, puisque cette technique est bien connue de l'homme du métier. Rappelons simplement qu'un avantage de cette technique est que le moulage par injection permet de réaliser des pièces en matériau composite de formes relativement compliquées en une seule opération de mise en forme, sans nécessiter d'opération de reprise ou de finition.

Pour réaliser le secteur lourd 5a ou 5b d'une masse oscillante conformément à l'invention, on peut procéder de la manière suivante. On prépare d'abord un mélange homogène contenant la matière plastique, les particules de métal lourd, et le renfort sous forme de fibres ; ce mélange étant à l'état liquide. De manière avantageuse, il est possible d'utiliser des produits intermédiaires disponibles dans le commerce pour préparer le mélange.

On peut par exemple se procurer le tungstène sous la forme de granulés de polyamide 12 (densité 1,02) chargé de poudre de tungstène (densité 19,2). Ces granulés sont commercialisés notamment sous la marque Gravi-Tech^{®} GRV-NJ-110-W par la société PolyOne Corporation. Le mélange dont sont faits les granulés a une densité de 11.0 et il convient pour le moulage par injection. De même, des fibres mélangées à du polyamide 12 sont commercialisées, par exemple, par la société EMS-GRIVORY sous l'appellation Grilamid^{®} TRVX-50X9 Natur. Il s'agit également de granulés. Ils sont constitués d'environ 50% (en volume) de fibres de verre ; le reste étant du polyamide 12.

On peut réaliser le mélange selon l'invention en mélangeant des granulés de Grilamid TR^{®} et de Gravi-Tech^{®} de manière à ce que le Grilamid constitue de préférence entre 2,5% et 5% du poids total du mélange. On utilise ce mélange de granulés pour alimenter le réservoir de moulage d'une installation de moulage par injection. Précisons que cette installation peut être de type usuel, mais qu'elle doit convenir également pour les opérations de surmoulage. On comprendra en outre que les granulés de Grilamid TR^{®} et de Gravi-Tech^{®} ont des densités très différentes. Les granulés de Grilamid TR^{®} ont donc tendance à se concentrer dans la partie supérieure du mélange. Il est donc important de s'assurer que le mélange est bien homogène, de manière à garantir une bonne reproductibilité des pièces moulées.

En résumé, pour réaliser une masse oscillante conforme à la présente invention, on réalise d'abord la pièce centrale 3a ou 3b en moulant par injection un premier matériau composite. Ensuite on surmoule le secteur lourd 5a ou 5b sur la partie centrale en injectant dans un moule contenant la partie centrale un second matériau composite chargé de particules de métal lourd.

La figure 2A est une vue en perspective de la partie centrale 3c d'une troisième variante de masse oscillante fabriquée par un procédé conforme à l'invention. Comme c'était déjà le cas avec la première variante, la partie centrale 3c représentée dans la figure 2A a la forme générale d'un disque plein. On peut voir sur la figure, qu'une feuillure 13 est formée dans l'arête supérieure de la partie centrale 3c, et qu'elle s'étend approximativement sur 180°. Comme on peut le voir sur les figures 2A et 2B, la partie centrale 3c présente également une deuxième feuillure 15 qui s'étend sur le même secteur angulaire que la première feuillure, mais qui est formée au niveau de l'arête inférieure. On peut voir encore sur les figures que les deux feuillures délimitent entre elles une nervure latérale 17 sensiblement en arc de cercle. Dans le présent exemple, l'épaisseur de la partie centrale 3c à l'endroit où est surmoulé le secteur lourd 5c est de 1, 7mm. L'épaisseur de la nervure 17, quant à elle, est limitée à 0,8mm et, enfin, les deux feuillures 13 et 15 se partagent les 0.9mm restant. La figure 2B est une vue partielle en coupe selon le rayon B-B de la figure 2A. Elle montre l'imbrication du secteur lourd avec la partie centrale. Comme on peut le voir sur cette figure, une fois le secteur lourd 5c surmoulé sur la partie centrale 3c, le matériau composite chargé constituant le secteur lourd remplit les deux feuillures 13 et 15. Ainsi, la nervure latérale 17 est complètement noyée dans la masse du secteur lourd. On comprendra donc que, conformément à l'invention, les feuillures 13 et 15 permettent à la partie centrale 3c et au secteur lourd 5c de s'imbriquer l'un dans l'autre. Nous désignerons ci-après par l'expression « zone de chevauchement » (référencée 19 sur la figure 2B) la zone dans laquelle la partie centrale 3c et le secteur lourd 5c sont imbriquées.

Une difficulté pour réaliser les masses oscillantes bi-matière de la présente invention est liée au fait que le polymère utilisé ne se mélange pas bien avec les particules de métal lourd. Plus spécifiquement, lors de l'injection, le polymère en fusion ne mouille que faiblement les particules de métal lourd. Outre le fait que ce phénomène augment la viscosité du mélange, un autre inconvénient est que, lors du surmoulage, le matériau composite chargé adhère très mal au matériau composite non chargé. C'est la raison pour laquelle, afin d'assurer un bon accrochage du secteur lourd sur la partie centrale, la nervure latérale est formée d'une alternance de premiers intervalles présentant une partie en contre-dépouille, et de seconds intervalles dépourvus de parties en contre-dépouille. Dans le mode de réalisation illustré aux figures 2A, 2B et 2C, les parties en contre-dépouille sont constituées par des trous traversant (collectivement référencés 21). Comme on peut le voir sur la figure 2A, la nervure latérale 17 comporte dix de ces trous qui sont de forme allongée et sont espacés en arc de cercle. La nervure latérale peut donc être subdivisée en une succession alternée d'intervalles contenant un trou et d'intervalles n'en contenant pas.

A la différence de la figure 2B, qui est une vue en coupe transversale d'un intervalle sans trou, la figure 2C montre la coupe transversale d'un intervalle avec un trou (référencé 21) (la coupe de la figure 2C étant faite selon le rayon C-C sur la figure 2A). Dans le présent exemple, les trous 21 ne sont pas droits, mais ils ont une largeur d'environ 0,35mm à leur embouchure supérieure, et d'environ 0.4mm à leur embouchure inférieure. On peut voir sur la figure 2C que le second matériau composite remplit complètement le trou 21. On comprendra donc que dans le mode de réalisation représenté, la partie centrale 3c et le secteur lourd 5c sont verrouillés mécaniquement l'un à l'autre, et qu'il est impossible de séparer ces deux parties sans en casser au moins une.

Avec sa densité supérieure à 8, le secteur lourd représente une masse relativement importante. Comme c'est principalement la nervure latérale 17 qui supporte le secteur lourd, la nervure doit être suffisamment rigide pour ne pas se déformer de manière irréversible sous la contrainte ; en cas de choc notamment. On comprendra que c'est la présence des intervalles sans contre-dépouille séparant deux trous successifs qui donne la rigidité nécessaire à la nervure 17. Dans le présent exemple, les 10 trous sont séparés par 9 intervalles n'ayant pas de partie en contre-dépouille.

Selon une variante avantageuse la nervure latérale 17 présente au moins une encoche référencée 23 sur la figure 2A. La fonction de cette encoche est de permettre à la matière en fusion d'arriver d'un côté de la nervure latérale comme de l'autre. En effet, si lors de l'injection du second matériau composite, ce dernier ne peut pas se répartir également des deux côtés de la nervure 17, la différence de pression engendrée risque de déformer la nervure.

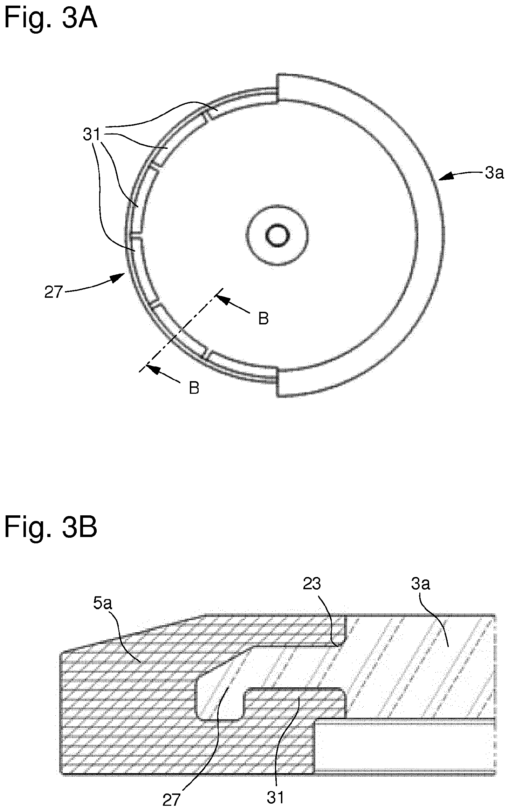

La figure 3A est une vue en plan de la partie centrale 3a de la masse oscillante montrée en perspective par la figure 1A. La figure 3B est une vue partielle en coupe selon le rayon B-B de la figure 3A. On peut voir sur ces deux figures, qu'une feuillure 23 est formée dans l'arête supérieure de la partie centrale 3a, et qu'elle s'étend approximativement sur 180°. On peut voir encore sur les figures que la feuillure délimite une nervure latérale 27 sensiblement en arc de cercle.. La figure 3B montre l'imbrication du secteur lourd 5a avec la partie centrale. Comme on peut le voir sur cette figure, une fois le secteur lourd 5a surmoulé sur la partie centrale 3a, le matériau composite chargé constituant le secteur lourd remplit la feuillure 23. Le matériau composite chargé remplit également la partie du moule qui s'étend sous la nervure latérale. Ainsi, la nervure latérale 27 est complètement noyées dans la masse du secteur lourd. On comprendra donc que, conformément à l'invention, la nervure 27 permet à la partie centrale 3a et au secteur lourd 5a de s'imbriquer l'un dans l'autre.

Afin d'assurer un bon accrochage du secteur lourd sur la partie centrale et conformément à l'invention, la nervure latérale 27 est formée d'une alternance de premiers intervalles présentant une partie en contre-dépouille, et de seconds intervalles dépourvus de parties en contre-dépouille. Dans le mode de réalisation illustré aux figures 1A, 3A et 3B, les parties en contre-dépouille sont constituées par des creux (collectivement référencés 31). Comme on peut le voir sur la figure 3A, la face inférieure de la nervure latérale 27 présente six creux 31 de forme allongée qui sont espacés en arc de cercle. On peut encore voir sur la figure 3A que des bras pleins séparent les creux. On comprendra que, dans ce mode de réalisation, ce sont les creux 31 qui constituent les parties en contre-dépouille, et que les bras pleins qui séparent les creux constituent les intervalles sans partie en contre-dépouille. Ainsi, la nervure latérale 27 est formée de 6 intervalles présentant une partie en contre-dépouille, ces intervalles étant séparés les uns des autres par 5 intervalles ne contenant pas de parties en contre-dépouille. Conformément à l'invention, la nervure latérale peut donc être subdivisée en une succession alternée d'intervalles contenant une partie en contre-dépouille et d'intervalles n'en contenant pas.

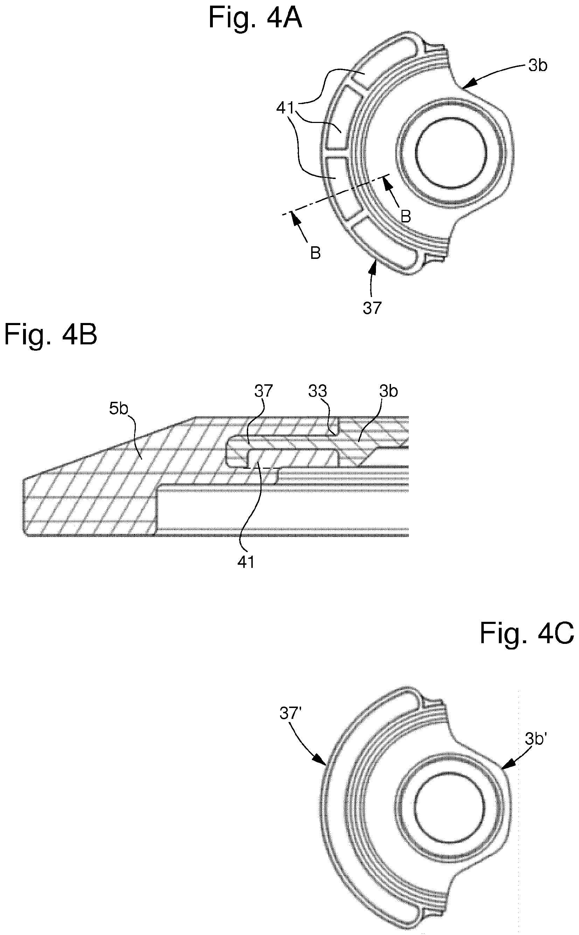

La figure 4A est une vue en plan d'un premier mode de réalisation de la partie centrale 3b de la masse oscillante qui fait l'objet de la vue en perspective de la figure 1B. La figure 4B est une vue partielle en coupe selon le rayon B-B de la figure 4A. Elle montre l'imbrication du secteur lourd 5b avec la partie centrale 3b. En comparant les figures 4A et 4B aux figures 3A et 3B, on peut voir que les variantes représentées sont très semblables.

Afin d'assurer un bon accrochage du secteur lourd sur la partie centrale et conformément à l'invention, la nervure latérale 37 est formée d'une alternance de premiers intervalles présentant une partie en contre-dépouille, et de seconds intervalles dépourvus de parties en contre-dépouille. Dans le mode de réalisation illustré aux figures 1B, 4A et 4B, les parties en contre-dépouille sont constituées par des creux (collectivement référencés 41). Comme on peut le voir sur la figure 4A, la face inférieure de la nervure latérale 37 présente quatre creux 41 de forme allongée qui sont espacés en arc de cercle. On peut encore voir sur la figure 4A que des bras pleins séparent les creux. On comprendra que, dans ce mode de réalisation, ce sont les creux 41 qui constituent les parties en contre-dépouille, et que les bras pleins qui séparent les creux constituent les intervalles sans partie en contre-dépouille. Ainsi, conformément à l'invention, la nervure latérale 37 peut être subdivisée en une succession alternée d'intervalles contenant une partie en contre-dépouille et d'intervalles n'en contenant pas. Dans le présent exemple, le nombre de premiers intervalles présentant une partie en contre-dépouille est de 4, et le nombre de seconds intervalles séparant les premiers intervalles les uns des autres est de 3.

La figure 4C est une vue en plan de dessous analogue à celle de la figure 4A, mais montrant la partie centrale de masse oscillante fabriquée par un procédé non conforme à l'invention. En effet, comme on peut le voir sur la figure, la face inférieure de la nervure latérale 37' ne présente qu'un seul creux 41' qui s'étend sur plus de 120°. Aucun bras plein ne vient couper le creux qui s'étend donc d'un bout à l'autre de la nervure 37'. Des essais conduits par la demanderesse ont montré que la nervure 37' n'était pas suffisamment rigide et qu'elle se déformait lors de l'injection en compromettant la stabilité du secteur lourd 5b. L'expérience montre donc que la nervure latérale de la partie centrale d'une masse oscillante selon l'invention devrait de préférence comporter au moins 3 seconds intervalles intercalés entre les premiers intervalles.

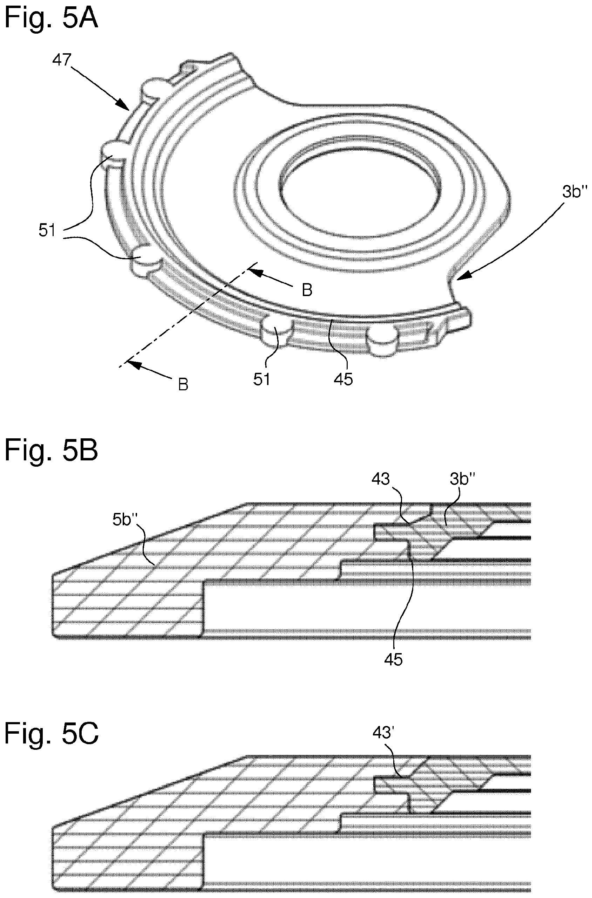

La figure 5A est une vue en perspective de dessous d'un second mode de réalisation de la partie centrale de la masse oscillante qui fait l'objet de la vue en perspective de la figure 1B. On peut voir sur la figure que, conformément à l'invention, la nervure latérale 47 est formée d'une alternance de premiers intervalles présentant une partie en contre-dépouille, et de seconds intervalles dépourvus de parties en contre-dépouille. Toutefois, dans la variante de mode de réalisation illustrée aux figures 5A et 5B, les parties en contre-dépouille ne sont pas des creux, mais des évidements latéraux formés à l'arrière d'une pluralité d'ergots (collectivement référencés 51). On peut voir que les ergots 51 viennent de matière avec un épaulement 45 auquel ils sont adossés. On peut voir encore que les ergots ont la forme de colonnes sensiblement cylindriques. la section des ergots s'élargit donc en s'écartant de l'épaulement 45. En raison de cet élargissement, des espaces rentrants sont formés entre l'épaulement 45 et les ergots 51 de part et d'autre de chaque ergots. Ces espaces rentrants constituent autant d'évidements latéraux à angle rentrant susceptibles d'être remplis au moins en partie par le second matériau composite lors du surmoulage. On comprendra donc que les évidements latéraux constituent les parties en contre-dépouille conformes à l'invention.

Dans le présent exemple, l'épaisseur de la partie centrale de la masse oscillante est particulièrement petite. En effet, l'épaisseur de la partie centrale 3b" à l'endroit où est surmoulé le secteur lourd 5" est de 0.83mm. Quant à l'épaisseur de la nervure latérale 47, elle est de 0,23mm sans les ergots et de 0,53mm aux endroits où la nervure présente un ergot 51. La feuillure 43 formée dans l'arrête supérieure de la partie centrale a une profondeur de 0,3mm.

La figure 5B est une vue partielle en coupe selon B-B de la figure 5A. Elle montre l'imbrication du secteur lourd 5b" avec la partie centrale 3b". On voit notamment sur cette figure que le second matériau composite chargé de particules de métal lourd remplit complètement la feuillure 43. La figure 5C est une vue partielle en coupe semblable à celle de la figure 5B, mais dans laquelle, la feuillure 43' est en biseau au lieu d'être droite. Lors de l'opération de surmoulage du secteur lourd sur la partie centrale, le second matériau composite qui est relativement visqueux ne parvient pas à remplir correctement la pointe du biseau. Cette difficulté engendre une ligne de séparation imprécise et inesthétique entre les deux matériaux composites. Ce problème est résolu par le mode de réalisation de la figure 5B dans lequel le biseau est tronqué supprimant sa pointe.

On comprendra en outre que diverses modifications et/ou améliorations évidentes pour un homme du métier peuvent être apportées au mode de réalisation qui fait l'objet de la présente description sans sortir du cadre de la présente invention définie par les revendications annexées.

## Revendications

1. Procédé de fabrication d'une masse oscillante (1a; 1b) en matériaux composites prévue pour entraîner un axe de remontoir de montre automatique, et comportant une partie centrale (3a ; 3b ; 3c) en un premier matériau composite et un secteur lourd (5a ; 5b ; 5c) en un second matériau composite chargé de particules de métal lourd, **caractérisé en ce que** la partie centrale et le secteur lourd sont joints concentriquement l'un à l'autre par l'intermédiaire d'une nervure latérale (17 ; 27 ; 37 ; 47) sensiblement en arc de cercle que présente la partie centrale, une feuillure (13 ; 23 ; 33, 43) étant formée dans l'arête supérieure de la partie centrale au-dessus de la nervure latérale, la nervure latérale comportant une alternance de premiers intervalles présentant une partie en contre-dépouille (21 ; 31 ; 41), et de seconds intervalles dépourvus de parties en contre-dépouille, le procédé comportant les étapes de :
- former la partie centrale (3a ; 3b ; 3c) avec la nervure latérale et la feuillure en injectant le premier matériau composite dans un moule ;
- surmouler le secteur lourd (5a ; 5b ; 5c) sur la partie centrale en injectant dans un moule contenant la partie centrale le second matériau composite, de manière à ce que le second matériau composite remplisse la feuillure ainsi qu'un espace sous la nervure latérale, de sorte que la nervure latérale soit enrobée dans le second matériau composite et que la partie centrale et le secteur lourd soient imbriqués.

2. Procédé de fabrication d'une masse oscillante selon la revendication 1, **caractérisée en ce que** la nervure latérale (17 ; 27 ; 37 ; 47) présente une épaisseur ne dépassant pas 1 mm.

3. Procédé de fabrication d'une masse oscillante selon la revendication 1 ou 2, **caractérisée en ce que** les premiers secteurs de la nervure latérale présente chacun un évidement qui constitue la partie en contre-dépouille.

4. Procédé de fabrication d'une masse oscillante selon la revendication 3, **caractérisée en ce que** l'évidement est constitué par un creux.

5. Procédé de fabrication d'une masse oscillante selon la revendication 3, **caractérisée en ce que** l'évidement est constitué par un trou traversant.

6. Procédé de fabrication d'une masse oscillante selon la revendication 1 ou 2, **caractérisée en ce que** la nervure latérale comporte des ergots, chaque ergot étant porté par un des premiers secteurs de la nervure latérale, et **en ce que** cette dernière présente un épaulement longitudinal, la partie en contre-dépouille du dit un des premiers secteurs étant constituée par un espace rentrant entre l'ergot et l'épaulement.

7. Procédé de fabrication d'une masse oscillante selon la revendication 6, **caractérisée en ce que** les ergots ont la forme de colonnes sensiblement cylindriques adossées à l'épaulement longitudinal.

## Patentansprüche

1. Verfahren zum Herstellen einer Schwingmasse (1a; 1b) aus Verbundmaterialien, die vorgesehen ist, eine Aufzugswelle einer automatischen Uhr anzutreiben, und einen Mittelteil (3a; 3b; 3c) aus einem ersten Verbundmaterial und einen gewichtigen Sektor (5a; 5b; 5c) aus einem zweiten Verbundmaterial, das mit Schwermetallpartikeln angereichert ist, umfasst, **dadurch gekennzeichnet, dass**
der Mittelteil und der gewichtige Sektor über eine im Wesentlichen kreisbogenförmige seitliche Rippe (17; 27; 37; 47), die der Mittelteil aufweist, konzentrisch miteinander verbunden sind, wobei in der oberen Kante des Mittelteils oberhalb der seitlichen Rippe eine abgeschrägte Fläche (13; 23; 33, 43) ausgebildet ist, wobei die seitliche Rippe abwechselnd erste Intervalle, die einen Gegenschrägenteil (21; 31; 41) aufweisen, und zweite Intervalle, die keine Gegenschrägenteile aufweisen, umfasst, wobei das Verfahren die folgenden Schritte umfasst:
- Bilden des Mittelteils (3a; 3b; 3c) mit der seitlichen Rippe und der abgeschrägten Fläche durch Spritzen des ersten Verbundmaterials in eine Form;
- Gießen des gewichtigen Sektors (5a; 5b; 5c) auf den Mittelteil durch Spritzen des zweiten Verbundmaterials in eine den Mittelteil enthaltende Form, derart, dass das zweite Verbundmaterial die abgeschrägte Fläche sowie einen Zwischenraum unter der seitlichen Rippe füllt, derart, dass die seitliche Rippe in das zweite Verbundmaterial eingehüllt ist und dass der Mittelteil und der gewichtige Sektor überlagert sind.

2. Verfahren zum Herstellen einer Schwingmasse nach Anspruch 1, **dadurch gekennzeichnet, dass** die seitliche Rippe (17; 27; 37; 47) eine Dicke, die 1 mm nicht überschreitet, besitzt.

3. Verfahren zum Herstellen einer Schwingmasse nach Anspruch 1 oder 2, **dadurch gekennzeichnet, dass** die ersten Bereiche der seitlichen Rippe jeweils eine Aussparung aufweisen, die den Gegenschrägenteil bildet.

4. Verfahren zum Herstellen einer Schwingmasse nach Anspruch 3, **dadurch gekennzeichnet, dass** die Aussparung durch einen Hohlraum gebildet ist.

5. Verfahren zum Herstellen einer Schwingmasse nach Anspruch 3, **dadurch gekennzeichnet, dass** die Aussparung durch ein Durchgangsloch gebildet ist.

6. Verfahren zum Herstellen einer Schwingmasse nach Anspruch 1 oder 2, **dadurch gekennzeichnet, dass** die seitliche Rippe Ansätze aufweist, wobei jeder Ansatz von einem der ersten Bereiche der seitlichen Rippe getragen wird, und dass diese Letztere eine Längsschulter aufweist, wobei der Gegenschrägenteil des einen der ersten Bereiche durch einen Zwischenraum gebildet ist, der zwischen dem Ansatz und der Schulter verbleibt.

7. Verfahren zum Herstellen einer Schwingmasse nach Anspruch 6, **dadurch gekennzeichnet, dass** die Ansätze die Form von im Wesentlichen zylindrischen Säulen haben, die sich an der Längsschulter abstützen.

## Claims

1. Method for making an oscillating weight (1a; 1b) made from composite materials, the oscillating weight being provided to drive an arbor of the automatic winding mechanism of a self-winding watch, and comprising a central part (3a; 3b; 3c) made from a first composite material and a heavy sector (5a; 5b; 5c) made from a second composite material charged with heavy metal particles, **characterized in that** the central part and the heavy sector are joined concentrically to one another by means of a substantially circular arc-shaped lateral rib (17; 27; 37; 47) belonging to the central part, a rebate (13; 23; 33; 43) being formed in the upper edge of the central part above the lateral rib, the lateral rib having an alternating sequence of first sections that have an undercut part (21; 31; 41) and second sections devoid of undercut parts, the method comprising the steps of:
- forming the central part (3a; 3b; 3c) with the lateral rib and the rebate by injecting the first composite material into a mold;
- overmolding the heavy sector (5a; 5b; 5c) onto the central part by injecting the second composite material into a mold containing the central part, so that the second composite material fills the rebate as well as a gap underneath the lateral rib, so that the lateral rib is embedded in the second composite material and that the central part and the heavy sector are interlocked.

2. Method for making an oscillating weight according to claim 1, **characterized in that** the lateral rib (17; 27; 37; 47) has a thickness not exceeding 1 mm.

3. Method for making an oscillating weight according to claim 1 or 2, **characterized in that** the first sections of the lateral rib each have a recess, which forms the undercut part.

4. Method for making an oscillating weight according to claim 3, **characterized in that** the recess is formed by a hollow.

5. Method for making an oscillating weight according to claim 3, **characterized in that** the recess is formed by a through hole.

6. Method for making an oscillating weight according to claim 1 or 2, **characterized in that** the lateral rib comprises catches, wherein each catch is borne by one of the first sectors of the lateral rib, and **in that** the latter has a longitudinal shoulder, wherein the undercut section of said one of the first sectors is formed by an inside corner space between the catch and the shoulder.

7. Method for making an oscillating weight according to claim 6, **characterized in that** the catches are in the form of substantially cylindrical columns backing onto the longitudinal shoulder.
